# EUROPÄISCHE PATENTSCHRIFT

(11) **EP 2 999 673 B1**
(45) Veröffentlichungstag und Bekanntmachung des Hinweises auf die Patenterteilung: **11.11.2020**
(21) Anmeldenummer: 14725009.6
(22) Anmeldetag: 13.05.2014
(51) Int. Cl.: C04B 7/13, C04B 14/10

(54) **VERFAHREN ZUR HERSTELLUNG EINES ZEMENTKLINKERERSATZSTOFFS**
METHOD FOR PRODUCING A CEMENT CLINKER SUBSTITUTE
PROCÉDÉ DE FABRICATION D'UN SUBSTITUT DE CLINKER

(30) Priorität: 23.05.2013 DE 102013105301
(43) Veröffentlichungstag der Anmeldung: 30.03.2016
(73) Patentinhaber: thyssenkrupp Industrial Solutions AG, 45143 Essen (DE)
(72) Erfinder: ENDERS, Michael, 48143 Münster (DE); ROHLOFF, Kathrin, 48231 Warendorf (DE); BERGER, Claudia, 59320 Ennigerloh (DE)
(74) Vertreter: thyssenkrupp Intellectual Property GmbH
(86) Internationale Anmeldenummer: PCT/EP2014/001284
(87) Internationale Veröffentlichungsnummer: WO 2014/187537

(56) Entgegenhaltungen:
- WO-A1-96/06057
- WO-A2-2013/023727
- US-A- 3 939 245
- US-A- 5 183 506
- AMMINI YAMUNA ET AL: "Phase-Pure Mullite from Kaolinite", JOURNAL OF THE AMERICAN CERAMIC SOCIETY, Bd. 85, Nr. 6, 1. Juni 2002 (2002-06-01), Seiten 1409-1413, XP055132412, ISSN: 0002-7820, DOI: 10.1111/j.1151-2916.2002.tb00289.x
- A. MITROVIC ET AL.: "Properties of composite cement with commercial and maufactured metakaolin", TEHNICKI VJESNIK, Bd. 20, Nr. 4, 30. April 2013 (2013-04-30) , Seiten 683-687, XP002728028,
- D.D VU ET AL: "Strength and durability aspects of calcined kaolin-blended Portland cement mortar and concrete", CEMENT AND CONCRETE COMPOSITES, Bd. 23, Nr. 6, 1. Dezember 2001 (2001-12-01), Seiten 471-478, XP055132564, ISSN: 0958-9465, DOI: 10.1016/S0958-9465(00)00091-3
- RYM DHOUIB SAHNOUN ET AL: "Sintering characteristics of kaolin in the presence of phosphoric acid binder", CERAMICS INTERNATIONAL, ELSEVIER, AMSTERDAM, NL, vol. 38, no. 1, 28 June 2011 (2011-06-28), pages 1-7, XP028118593, ISSN: 0272-8842, DOI: 10.1016/J.CERAMINT.2011.06.058 [retrieved on 2011-07-05]

## Beschreibung

Die Erfindung betrifft ein Verfahren zur Herstellung eines Zementklinkerersatzstoffs mit einem Ausgangsmaterial in Form von natürlichem und/oder synthetischem, zeolithhaltigem Puzzolan und/oder Tonen.

Zement wird zur Herstellung von Beton und Mörtel als Bindemittel verwendet und besteht im Wesentlichen aus Zementklinker, der bei seiner Herstellung hohe CO₂-Emissionen verursacht. Vor dem Hintergrund der CO₂-Ersparnis werden immer häufiger Zementklinkerersatzstoffe dem Zement beigemischt, die ihrerseits wenig bis gar kein CO₂ bei deren thermischen Behandlung emittieren sowie durch ihr geringes erforderliches Temperaturniveau einen geringeren Energiebedarf aufweisen damit wiederum eine Verringerung des CO₂-Ausstoßes bewirken. Hierüber sind insbesondere natürlich vorkommende Tone oder zeolithhaltige Puzzolane geeignet, die durch eine gezielte thermische Behandlung in Stoffe mit puzzolanischen Eigenschaften überführt werden können und insbesondere als Zementklinkerersatzstoff Verwendung finden.

Ammini Yamura ET AL: "Phase-Pure Mullite from Kaolinite", Journal of the American Ceramic Society, Bd. 85, Nr. 6, 1. Juni 2002, Seiten 1409-1413, XP055132412,ISSN: 0002-7820, DOI: 10.1111/j.1151-2916.2002.tb00289.x befasst sich mit Untersuchungen zur Herstellung von phasemreinem Mullit aus Kaolinit, wobei die Erkenntnis gewonnen wird, dass die Mullitphasenbildung erst bei Behandlungstemperaturen ab 1150°C beginnt.

A. MITROVIC ET AL.: "Properties of composite cement with commercial and manufactured metakaolin", TEHNICKI VJESNIK; Bd. 20, Nr. 4, 31. Dezember 2013, Seiten 683-687, betrifft Untersuchungen von Kompositzementen mit calciniertem Kaolin als Zementklinkerersatzstoff.

Die WO 96/06057 betrifft ein Verfahren zur Herstellung eines puzzolanen Materials, welches bei der Zementherstellung genutzt werden kann, wobei ein puzzolanes Ausgangsmaterial verwendet wird, welches in einer Wirbelschicht bei einer Temperatur um 780°C thermisch behandelt wird.

Die US 5 183 506 A offenbart die Zugabe von Wollastonit bei der Zementklinkerherstellung. Die WO 2013/023727 A2 betrifft die Herstellung und den Einsatz von Ternesit als Additiv zu Portlandzement und -Bindemitteln durch Sinterung von Rohstoffen, welche ausreichende Mengen an CaO, SiO₂ und SO₃ bereitstellen. Zur Beeinflussung der Zusammensetzung des Ternesitklinkers und der Menge und Anteile der reaktiven Phasen wurden dabei auch Mineralisatoren, wie CaF₂, Na₂CO₃, K₂CO₃, FeCl₃, MgCl₂ eingesetzt.Aus dem Artikel von Rym Dhouib Sahnoun, Jamel Bouaziz, "Sintering characteristics of kaolin in the presence of phoshoric acid binder", Ceramics International, Elsevier, Amsterdam, NL, Bd. 38, Nr. 1, 28. Juni 2011 (2011-06-28), Seiten 1-7, XP028118593, ISSN: 0272-8842, DOI: 10.1016/J.Ceramint.2011.06.058, ist die Herstellung eines Keramikprodukts durch eine Wärmebehandlung von Kaolin unter Zugabe von Phosphorsäure bekannt.

Derart hergestellte Zementklinkerersatzstoffe haben jedoch den Nachteil, eines deutlich erhöhten Wasserbedarfs (w/z-Wert), wodurch sich insbesondere auch die Frühfestigkeit verschlechtert.

Der Erfindung lag daher die Aufgabe zugrunde, den Wasseranspruch des Zementklinkerersatzstoffs deutlich zu senken, sodass dieser vorzugsweise in der Größenordnung eines reinen OPC-Zements liegt und somit die Festigkeit, insbesondere die Frühfestigkeit gesteigert werden kann.

Erfindungsgemäß wird diese Aufgabe durch ein Verfahren zur Herstellung eines Zementklinkerersatzstoffs gelöst, bei dem ein Ausgangsmaterial in Form von natürlichem und/oder synthetischem, zeolithhaltigem Puzzolan und/oder Tonen bereitgestellt wird und das Ausgangsmaterial zur Herstellung des Zementklinkerersatzstoffs in einem Temperaturbereich von 650 - 1.000°C in einem Flugstromreaktor oder in einer Wirbelschicht thermisch behandelt wird. Dabei wird vor und/oder während der thermischen Behandlung des Ausgangsmaterials mindestens ein Flussmittel zugegeben, das die spezifische Oberfläche des Zementklinkerersatzstoffs reduziert.

Das mindestens eine Flussmittel wird aus der Gruppe der Alkali- bzw.Erdalkalioxide oder Alkali- bzw. Erdalkalihalogenide oder Alkali- bzw.Erdalkalihydroxide oder Alkali- bzw. Erdalkalisulfate oder Alkali- bzw.Erdalkalicarbonate oder einem Oxid aus der Gruppe der Ubergangsmetalle und/oder aus Mischungen dieser Gruppen ausgewählt oder es werden als das mindestens eine Flussmittel Salze von Aluminium, Eisen oder Zink oder Salze organischer Sauren und/oder deren Mischungen verwendet oder es wird als das mindestens eine Flussmittel eine chloridische Verbindung mit einem Anteil von 0,1 - 0,52 Gew.-% relativ zum aufgegebenen Ausgangsmaterial verwendet-

Erfindungsgemäß werden als Ausgangsmaterial tonmineralhaltige Stoffe verwendet, wobei als tonmineralhaltiger Stoff Kaolin verwendet wird.

Das Flussmittel bewirkt außerdem eine Absenkung des Schmelzpunktes, sodass während der thermischen Behandlung die Schmelzbildung begünstigt wird. Dies führt zu einem früheren bzw. besseren Anschmelzen der ton- bzw. zeolithhaltigen Körner, sodass das verdampfte Kristallwasser schneller oder vollständiger aus dem plastifizierten Gefüge entweichen kann, offenporige Blasengefüge kollabieren und die Ausbildung von verbleibenden Holräumen damit unterdrückt wird.

Durch die Zugabe des Flussmittels kann der Wasserbedarf des Zementklinkerersatzstoffs um 6,5% und mehr gesenkt werden. Als Messgröße zur Beurteilung der Flussmittelwirkung auf die Verarbeitungseigenschaft wird der Wasser/Zement-Wert herangezogen. Dessen Bestimmung ist angelehnt an die ASTM C1437-07 und C230. Dabei wird diejenige Wassermenge ermittelt, die zur Erreichung eines Ausbreitmaßes von 110 % erforderlich ist. Im Folgenden wird diese Größe als w/z-Wert bezeichnet.

Insbesondere die Zugabe als Lösung stellt sicher, dass bei den geringen Volumenanteilen des Feststoffs in der Atmosphäre des Ofens/Reaktors eine Wirkung an den Tonteilchen oder Zeolithen selbst erzielt wird. Im Falle der trockenen Zugabe kann diese Wirkung durch eine intensive Mischung oder gemeinsame Vermahlung oder durch elektrochemische Modifikationen der Teilchenoberflächen erzielt werden. Die thermische Behandlung in dem Flugstromreaktor oder in der Wirbelschicht findet vorzugsweise bei Temperaturen von 830 bis 950°C statt.

Der Anteil des Flussmittels beträgt vorzugsweise 0,1 bis 5 Gew.-%, vorzugsweise 1 bis 2,5 Gew.-% und insbesondere 1,2 bis 1,8 Gew.-%.

Das mindestens eine Flussmittel wird vorzugsweise vor der thermischen Behandlung mit dem Ausgangsmaterial vermischt. Außerdem kann das mindestens eine Flussmittel gemeinsam mit einer Flüssigkeit oder in trockener Form dem Ausgangsmaterial zugegeben werden. Weiterhin ist es denkbar, dass eine Mischung aus Ausgangsmaterial und dem mindestens einen Flussmittel vor der thermischen Behandlung elektrostatisch aufgeladen wird, wodurch die Reduzierung der spezifischen Oberfläche des Zementklinkerersatzstoffs begünstigt wird. Weiterhin ist es denkbar, dass der Mischung aus Ausgangsmaterial und dem mindestens einen Flussmittel vor der thermischen Behandlung ein Flockungsmittel zugegeben wird. Dadurch wird in den Agglomeraten eine höhere innere Oberfläche erzeugt, was zum einen eine stärkere Bindung zwischen dem zu calcinierenden ton- oder zeolithhaltigen Material und dem Flussmittel hervorruft und zum anderen eine intensivere Wechselwirkung von Flussmittel und dem zu calcinierenden Material mit sich bringt.

Durch die Zugabe des Flussmittels werden die ggf. porösen Körner des Ausgangsmaterials oberflächig versiegelt, sodass bei einer nachträglichen Verarbeitung zu Beton weniger Wasser aufgesaugt und an der inneren Oberfläche absorbiert wird, welches dann für die Hydratation zur Verfügung steht. Durch die Zugabe des Flussmittels ist eine deutlich bessere Verarbeitbarkeit des hergestellten Zementklinkerersatzstoffs feststellbar. Insbesondere kommt die Verarbeitbarkeit bei gleicher oder ähnlicher Wasserzugabe an die Verarbeitbarkeit des herkömmlichen OPC-Zements heran. Weiterhin wird die Frühfestigkeit in Folge des Verzichts auf verdünnendes "Wasser und/oder Fließhilfsmittel" gesteigert. Mit der Zugabe des Flussmittels kann auch der Wasserbedarf zeolithhaltiger Puzzolane korrigiert werden. Diese absorbieren ohne die Zugabe des Flussmittels in den offenen Gerüststrukturen Wasser und reduzieren dadurch die Verarbeitbarkeit. Durch die Zugabe des Flussmittels vor bzw. während der thermischen Behandlung des Zementklinkerersatzstoffs wird auch der Wasseranspruch dieser Stoffe reduziert. Als Flussmittel kommen aus der Gruppe der Alkalisalze insbesondere folgende Stoffe in Betracht:
KCl, K₂SO₄, K₂S, K₂CO₃, KF, KNO₃, K₂CO₃, K₃PO₄, K₂BO₃, K₂O, usw. oder NaC₁, Na₂SO₄, Na₂SO₃, NaF, NaNO₃, Na₂CO₃, Na₃PO₄, Na₂BO₃, Na₂O. Aus der Gruppe der Erdalkaliverbindungen kommen beispielsweise CaF₂, CaCl₂, CaSO₄, CaS, CaCO₃, CaF₂, Ca(NO₃)₂, CaCO₃, Ca₃(PO₄)₂, CaBO₃, CaO, usw. oder MgF₂, MgCl₂, MgSO₄, MgS, MgCO₃, MgF₂, Mg(NO₃)₂, MgCO₃, Mg₃(PO₄)₂, MgBO₃, MgO in Betracht.

Bei den folgenden Versuchen hat Natriumkarbonat (Na₂CO₃) die besten Werte für einen niedrigeren w/z-Wert ergeben.

### Beispiel 1

Bei diesem Beispiel wurde als Ausgangsmaterial Kaolin gewählt, wobei als Flussmittel 1% Na₂CO₃ zugegeben wurde.

Nach der thermischen Behandlung wurden ca. 70 % CEM I und ca. 30 % flussmittelbehaftetes Meta-Kaolin für die w/z-Wert-Bestimmung gemischt. Der w/z-Wert des flussmittelbehafteten Meta-Kaolin enthaltenden Zementes hat eine Verringerung in Folge der Flussmittelzugabe um 4,7 % im Vergleich zu einem Zement, der flussmittelfrei behandelten Meta-Kaolin enthält (w/z-Wert = 0,618), ergeben.

### Beispiel 2

Bei einer höheren Na₂CO₃-Zugabe von 1,75 % konnte der w/z-Wert auf 0,58 gesenkt werden. Das entspricht ausgehend vom w/z-Wert von 0,618 eines Zementes, der flussmittelfrei behandelten Meta-Kaolin enthält, einer Verbesserung von 6,1 %.

### Beispiel 3

Bei einer noch höheren Zugabe des Na₂CO₃ (2,5%) ergab sich eine Verbesserung des w/z-Wertes von 6,5 % - im Vergleich zu einer flussmittelfreien Kaolinbehandlung.

### Beispiel 4

Bei Verwendung von Natriumchlorid als Flussmittel liegt der w/z-Wert bei einer 1%igen Zugabe in der gleichen Größenordnung wie bei der Zugabe von 1 % Na₂CO₃, nämlich bei 0,586.

Durch die Verwendung des Flussmittels wird die Verarbeitbarkeit des Ausgangsmaterials in Form von natürlichen und/oder synthetischen, zeolithhaltigen Puzzolanen und/oder Tonen, deutlich verbessert. Dies liegt insbesondere in der Schmelzpunkt senkenden Wirkung des Flussmittels, sodass bereits bei niedrigeren Temperaturen eine Erweichung der Partikeloberfläche stattfindet.

Wie vorhergehend erläutert kann ein verringerter Wasserbedarf bei der Verarbeitung des Zementes zu einer Erhöhung der Frühfestigkeit und somit beispielsweise zum früheren Ausschalen beitragen. Dies kann bewusst durch den Einsatz von Flussmitteln bei der Herstellung von Zementklinkerersatzstoffen gesteuert bzw. beeinflusst werden. Zusätzlich erlaubt der Einsatz von Flussmitteln eine energieoptimierte Herstellung einiger Zementklinkerersatzstoffe aufgrund der Möglichkeit, die Materialien zur Erreichung der gewünschten Eigenschaften des Zementklinkerersatzstoffes bei einem geringeren Temperaturniveau zu behandeln.

## Patentansprüche

1. Verfahren zur Herstellung eines Zementklinkerersatzstoffs, wobei
a. ein Ausgangsmaterial in Form von natürlichem und/oder synthetischem, zeolithhaltigem Puzzolan und /oder Tonen bereitgestellt wird und
b. das Ausgangsmaterial zur Herstellung des Zementklinkerersatzstoffs in einem Flugstromreaktor oder in einer Wirbelschicht in einem Temperaturbereich von 650 - 1.000°C thermisch behandelt wird,
**dadurch gekennzeichnet, dass**
c. vor und/oder während der thermischen Behandlung des Ausgangsmaterials mindestens ein Flussmittel zugegeben wird, das die spezifische Oberfläche des Zementklinkerersatzstoffs reduziert und
d. das mindestens eine Flussmittel aus der Gruppe der Alkali- bzw. Erdalkalioxide oder Alkali- bzw. Erdalkalihalogenide oder Alkali- bzw. Erdalkalihydroxide oder Alkali- bzw. Erdalkalisulfate oder Alkali- bzw. Erdalkalicarbonate oder einem Oxid aus der Gruppe der Übergangsmetalle und/oder aus Mischungen dieser Gruppen ausgewählt wird
oder dass als das mindestens eine Flussmittel Salze von Aluminium, Eisen oder Zink oder Salze organischer Säuren und/oder deren Mischungen verwendet wird
oder dass als das mindestens eine Flussmittel eine chloridische Verbindung mit einem Anteil von 0,1 - 0,52 Gew.-% relativ zum aufgegebenen Ausgangsmaterial verwendet wird, wobei als Ausgangsmaterial tonmineralhaltige Stoffe verwendet werden, wobei als tonmineralhaltiger Stoff Kaolin verwendet wird.

2. Verfahren nach Anspruch 1, **dadurch gekennzeichnet, dass** das Flussmittel mit einem Anteil von 0,1 - 5 Gew.-% verwendet wird.

3. Verfahren nach Anspruch 1, **dadurch gekennzeichnet, dass** das mindestens eine Flussmittel vor der thermischen Behandlung mit dem Ausgangsmaterial vermischt wird.

4. Verfahren nach Anspruch 1, **dadurch gekennzeichnet, dass** das mindestens eine Flussmittel gemeinsam mit einer Flüssigkeit oder in trockener Form dem Ausgangsmaterial zugegeben wird.

5. Verfahren nach Anspruch 1, **dadurch gekennzeichnet, dass** eine Mischung aus Ausgangsmaterial und dem mindestens einem Flussmittel vor der thermischen Behandlung elektrostatisch aufgeladen wird.

6. Verfahren nach Anspruch 1, **dadurch gekennzeichnet, dass** einer Mischung aus Ausgangsmaterial und dem mindestens einem Flussmittel vor der thermischen Behandlung ein Flockungsmittel zugegeben wird.

## Claims

1. Method for producing a cement clinker substitute by
a. providing a starting material in the form of natural and/or synthetic, zeolite-containing pozzolan and/or clays, and
b. thermal-treating the starting material for producing the cement clinker substitute in an entrained flow reactor or in a fluidized bed in a temperature range of 650-1000°C, **characterized in that**
c. before and/or during the thermal treatment of the starting material, at least one flux is added which reduces the specific surface area of the cement clinker substitute and
d. the at least one flux is selected from the group of the alkali metal oxides and/or alkaline earth metal oxides or alkali metal halides and/or alkaline earth metal halides or alkali metal hydroxides and/or alkaline earth metal hydroxides or alkali metal sulfates and/or alkaline earth metal sulfates or alkali metal carbonates and/or alkaline earth metal carbonates, or an oxide from the group of the transition metals, and/or from mixtures of these groups
or **in that** salts of aluminum, iron, or zinc, or salts of organic acids, and/or mixtures thereof are used as the at least one flux
or **in that** a chloridic compound with a proportion of 0.1-0.52 wt% relative to the given starting material is used as the at least one flux, wherein clay mineral-containing substances are used as starting material, wherein kaolin is used as clay mineral-containing substance.

2. Method according to Claim 1, **characterized in that** the flux is used with a proportion of 0.1-5 wt%.

3. Method according to Claim 1, **characterized in that** the at least one flux is mixed with the starting material before the thermal treatment.

4. Method according to Claim 1, **characterized in that** the at least one flux is added together with a liquid or in dry form to the starting material.

5. Method according to Claim 1, **characterized in that** a mixture of starting material and the at least one flux is electrostatically charged before the thermal treatment.

6. Method according to Claim 1, **characterized in that** a flocculant is added to a mixture of starting material and the at least one flux before the thermal treatment.

## Revendications

1. Procédé de fabrication d'un substitut de clinker de ciment, dans lequel
a. un matériau de départ sous forme de pouzzolane naturelle et/ou synthétique contenant de la zéolite, et/ou d'argiles est préparé, et
b. le matériau de départ pour la fabrication du substitut de clinker de ciment est traité thermiquement dans un réacteur à flux entraîné ou dans un lit fluidisé dans une plage de température allant de 650 à 1 000 °C,
**caractérisé en ce que**
c. avant et/ou après le traitement thermique du matériau de départ, au moins un fondant est ajouté, qui réduit la surface spécifique du substitut de clinker de ciment, et
d. ledit au moins un fondant est choisi dans le groupe constitué par les oxydes alcalins et alcalino-terreux ou les halogénures alcalins et alcalino-terreux ou les hydroxydes alcalins et alcalino-terreux ou les sulfates alcalins et alcalino-terreux ou les carbonates alcalins et alcalino-terreux ou un oxyde du groupe des métaux de transition et/ou parmi les mélanges de ces groupes,
ou **en ce que** des sels d'aluminium, de fer ou de zinc ou des sels d'acides organiques et/ou leurs mélanges sont utilisés en tant que ledit au moins un fondant,
ou **en ce qu'**un composé chlorique en une proportion de 0,1 à 0,52 % en poids par rapport au matériau de départ ajouté est utilisé en tant que ledit au moins un fondant, des matières contenant des minéraux argileux étant utilisées en tant que matériau de départ, du kaolin étant utilisé en tant que matière contenant des minéraux argileux.

2. Procédé selon la revendication 1, **caractérisé en ce que** le fondant est utilisé en une proportion de 0,1 à 5 % en poids.

3. Procédé selon la revendication 1, **caractérisé en ce que** ledit au moins un fondant est mélangé avec le matériau de départ avant le traitement thermique.

4. Procédé selon la revendication 1, **caractérisé en ce que** ledit au moins un fondant est ajouté au matériau de départ conjointement avec un liquide ou sous forme sèche.

5. Procédé selon la revendication 1, **caractérisé en ce qu'**un mélange de matériau de départ et dudit au moins un fondant est chargé électrostatiquement avant le traitement thermique.

6. Procédé selon la revendication 1, **caractérisé en ce qu'**un agent de floculation est ajouté à un mélange de matériau de départ et dudit au moins un fondant avant le traitement thermique.
